# EUROPEAN PATENT SPECIFICATION

(11) **EP 1 684 594 B1**
(45) Date of publication and mention of the grant of the patent: **03.08.2016**
(21) Application number: 04797773.1
(22) Date of filing: 10.11.2004
(51) Int. Cl.: A23L 7/143, A23L 7/196

(54) **RICE-BASED FOOD COMPOSITIONS AND PROCESSES FOR THEIR PREPARATION**
NAHRUNGSMITTELZUSAMMENSETZUNGEN AUF REISGRUNDLAGE SOWIE VERFAHREN ZU IHRER HERSTELLUNG
COMPOSITIONS ALIMENTAIRES À BASE DE RIZ ET PROCÉDÖS DE PRÉPARATION ASSOCIÉS

(30) Priority: 21.11.2003 EP 03026770
(43) Date of publication of application: 02.08.2006
(73) Proprietor: DSM IP Assets B.V., 6411 TE Heerlen (NL); Bühler AG, 9240 Uzwil (CH)
(72) Inventor: BRUEMMER, Thomas, CH-9014 St. Gallen (CH); KLEEMANN, Nicole, 79774 Albbruck (DE); MEYER, Markus, CH-9322 Egnach (CH); SCHWEIKERT, Loni, CH-4315 Zuzgen (CH)
(74) Representative: Rabanus, Birgit
(86) International application number: PCT/EP2004/012710
(87) International publication number: WO 2005/053433

(56) References cited:
- US-A- 3 620 762
- US-A- 4 446 163
- US-A- 5 387 423
- US-A- 5 932 271

## Description

The present application relates to rice-based food compositions and to processes for their preparation. More particularly, the present application, in one aspect, relates to a micronutrient-containing rice-based food composition (hereinafter referred to also as "enriched reconstituted rice") and to a process for the preparation thereof. In a further aspect, the present application relates to micronutrient-enriched rice which comprises a mixture of natural rice and enriched reconstituted rice.

In still another aspect, the present application relates to a process for the manufacture of a rice-based grain-like food product (hereinafter referred to as "reconstituted rice" or "recon rice") and to said reconstituted rice obtainable by that process.

For large parts of the population, especially in rural areas in Far East and Latin America, rice is a staple food and may provide more than 50% of the daily caloric intake. However, after milling of the raw rice, only a small fraction of the original vitamin content remains in the grain. The majority of the vitamins are removed together with the hull and the endosperm.

Furthermore, rice is not a significant source for vitamin A, which is one of the most deficient vitamins in malnourished people from emerging and developing countries. Today, vitamin A deficiency is still a major cause of blindness of children in those countries. There is a clear need to provide these populations regularly with the vitamins in the diet that are below their requirement in order to prevent overt diseases but also to prevent the wide prevalence of debilitating marginal deficiencies. For this reason rice fortification programs - among fortification of other staple foods - have been targeted by governments, UN agencies and other non-profit organizations.

Within the last decades scientists and officials have undertaken numerous attempts to develop low-price, simple and efficient methods to fortify rice with vitamins and other micronutrients deficient in the diet. As a matter of fact, none of them have yet been working satisfactorily. Although rice would be the preferred carrier in wide parts of the world, the size of the kernels does not allow a simple mixing procedure with vitamin powders or beadlets, because the vitamin forms would segregate immediately from the rice grains. A further difficulty in rice fortification is, that rice has to be cooked for a period of 20 - 30 minutes, before it is ready to eat, which is a remarkable stress to sensitive micronutrients like vitamins. Not to mention the fact, that rice is usually rinsed with water prior to cooking, thus washing away greater parts of the added vitamins.

One approach to overcome the above mentioned difficulties is to prepare artificial rice kernels, in which the vitamins are embedded and consequently do no longer separate from the rice grains. Furthermore, embedding makes extraction of the vitamin by rinsing or cooking more difficult and may provide a certain protection against oxidation, because the vitamins are enveloped by a protective matrix.

French patent publication No. 1,530,248 describes fortified artificial kernels, prepared from a dough of semolina or flour and vitamins, which might contain in addition processing aids like mono-di-glycerides or proteins. The dough is formed to a pasta-like structure by pressing it through a dough press. Then the strands are cut into pieces, which are finally dried. The artificial kernels are mixed with natural grains in a relation of 1 : 20 up to 1 : 1000, particularly between 1: 50 up to 1: 500. However, the kernels prepared according to this method do not always show a sufficient cooking stability, meaning that the artificial grains tend to disintegrate during cooking and thus release the vitamins to the cooking water which is finally poured off.

US patent No. 3,620,762 discloses a process for producing enriched artificial rice by kneading rice flour, nutrients and if necessary a binder, and then steaming the mixture in order to semigelatinize the starch. After that the product is granulated in order to get grains similar to rice, which finally might be coated. However, this method requires a quite long time for steam treatment of about 15 to 30 min, which can lead to processing losses of sensitive micronutrients like vitamins, and in addition the harsh heating conditions will negatively influence the taste of the artificial grains. Both disadvantages are also true for the method disclosed in US 4,446,163 in which gelatinizing is done by saturated steam in an autoclave.

A method to reduce heating time is extrusion, which has been described several times for the preparation of artificial rice grains. However, in most of the publications the preparation conditions lead to fast-cooking products or even instant products, which are not applicable for the fortification of normal rice. Due to the reduced cooking time, the artificial rice kernels will tend to disintegrate before the normal rice grains are tender and thus will release the micronutrients to the cooking water.

Japanese patent publication 61 037068 also describes the preparation of artificial rice by extrusion, but the preparation conditions lead to an expanded product. As commonly known, expanded products have a reduced density. They will separate easily from natural rice grains and are therefore not feasible for the enrichment of natural rice. This problem is described in JP 58 005148, too. In order to solve it, the addition of a density-increasing agent in a relatively high amount is necessary.

The process disclosed in JP 2002 233317 uses a combination of rice-derived healthy ingredients including vitamins and minerals together with a starchy matter and brown rice or ground brown rice in order to produce artificial rice by extrusion. However, the method needs a "gelatinizing agent" like gelatin, pectin, gums or other binders. Furthermore, only a low vitamin enrichment is achieved and the products do not provide micronutrients like vitamin A, which are naturally not present in rice.

The process disclosed in US 5,609,896 once more uses extrusion technology to prepare artificial enriched rice kernels, and overcomes the problem of insufficiently stable kernels and consecutive vitamin loss by adding specific ingredients, viz., a heat stabilizing agent (e.g. sulfites); a binding agent (e.g. solubilized proteins, gums, polysaccharides); a cross-linking agent (e.g. edible aldehydes, glutaraldehyde volatile acids); and an aqueous agent (mainly water).

However, several of the required ingredients - especially from the group of the heat stabilizing and the cross-linking agents - are under discussion to cause allergenic reactions, or to be potentially carcinogenic. Furthermore, the production process consists of several steps, which makes its implementation more difficult and costly.

It is one objective of the present invention to provide micro-nutrient enriched rice while avoiding the shortcomings of the prior art.

Thus, in one aspect, the present invention relates to a for the preparation of enriched reconstituted rice which comprises the steps of
(a) hydrating a mixture of a comminuted rice matrix material, at least one micronutrient, and an emulsifier to obtain a paste containing about 20-30 wt.-% of water and kneading the paste obtained while heating to about 70-100 °C for no more than about 5 minutes until the rice starch is semigelatinized;
(b) forming the semigelatinized mass to strands and cutting them to obtain grains similar or equal to the size of rice grains; and
(c) drying the grains to a moisture content of no more than 15 wt.-%.

The application further relates to the enriched reconstituted rice obtainable by the above process.

The term "micronutrient" as used herein denotes physiologically essential components of the human diet such as vitamins, e.g., vitamin A, vitamin B1, Folic acid, Niacin and vitamin B 12, vitamin B2, vitamin E and C, Biotin, Pantothenates, vitamin K and derivatives therof, as well as minerals and trace elements such as Iron, Selenium, Zinc and Calcium. The micronutrients are present in the enriched reconstituted rice provided by the invention in an amount of from 0.1 to 5 % based on the weight of the final composition. Preferably, the micronutrients are present in the enriched reconstituted rice provided by the invention in an amount sufficient to provide 5% to 300% of the RDA (Recommended Daily Allowance for an adult) in 1 g.

The comminuted rice matrix material used in the process of the invention may be broken, cracked or otherwise degraded rice grains which are at least partially, or predominantly comminuted, such as rice semolina or rice flour. This matrix material is hydrated by adding water and/or steam to a water content of 15 - 35wt.-% and further, an emulsifier and the micronutrients. Examples of emulsifiers are lecithins or mono- or diglycerides of C₁₄₋₁₈ - fatty acids, or mixtures thereof. Suitably, 0.5 wt.-% to 3 wt.-% of emulsifier are used, based on the total weight of the composition. The micronutrients are usually added in a powder form, but oily vitamins like vitamin A or vitamin E may also be used as oils. However, powdered product forms of oil-soluble vitamins are preferred because of the easier handling of these kinds of preparations. Furthermore, the powdered product forms themselves may provide a certain protection to sensitive micronutrients. The hydrated mixture is exposed to shear force, e.g., kneaded, to form a paste-like mixture with heating for no more than 5 minutes, to 70 - 100°C. The heating/kneading procedure is referred to hereinafter as "preconditioning". Heating can be accomplished by an external heating source or, preferably, by introducing steam during the process of producing the paste-like mixture. While all the components, i.e., matrix material (rice semolina or flour), emulsifier and micronutrients may be mixed before wetting it is preferred to first produce a paste-like mixture of the rice matrix material and emulsifier, and to introduce the micronutrients into the paste-like mixture after preconditioning, i.e., just before step (b). In step (b), further processing of the preconditioned mass as obtained in step (a) can be accomplished any method used in food technology for processing dough into strands and is suitably carried out by extrusion using conventional gear. In a preferred embodiment of the invention, a double screw extruder is used. The temperature in the extruder may be 60°C to 120°C with a residence time of the mixture in the extruder being suitably about 10 - 90 sec. The strands leaving the extruder are adjusted to a diameter similar to that of rice grains and are cut into pieces the size of rice grains. The so obtained grains are dried in a suitable dryer, e.g. a fluidized bed dryer or a belt dryer, to a moisture content of no more than 15 wt.-%. The resulting grains can be admixed to regular rice in a ratio of, e.g., 1 wt.-% to natural rice.

In another aspect, the present application relates to a process for manufacturing reconstituted rice kernels having a shape similar or equal to natural rice kernels and which can be used for simulating natural rice kernels. The process according to that aspect of the present application comprises the steps of:
(A) comminuting rice and/or broken rice to obtain a broken rice matrix material;
(B) hydrothermally-mechanically treating the broken rice matrix material in a hot and damp medium in the presence of both water and water vapour, and mixing the broken rice matrix material while exposing the matter to shear in order to cause at least partial gelatinization of the starch in the broken rice matrix material;
(C) forming the at least partially gelatinized broken rice matrix material by pressing and portioning to obtain particles having a shape similar to or like natural rice kernels;
(D) drying these particles having a shape similar to or like natural rice kernels.

Alternatively, the process according to the steps (A) and (B) may be carried out in reversed order, i.e. step (B) is carried out prior to step (A). Optionally, an intermediate drying step may then be carried out between steps (B) and (A).

The use of broken rice as a low-priced raw material contributes to lowering overall production costs. Furthermore, this process allows the addition of any kinds of additives during steps (B), (C) and (D). When added during steps (B) or (C), the additives will be distributed throughout the matrix material which has proven to be particularly useful in preparing vitamin and mineral-enriched reconstituted rice. Thus, some major drawbacks of coated whole rice kernels having a vitamin and mineral-enriched coating are avoided (broken rice being far less expensive than whole rice kernels; additives distributed throughout the bulk of reconstituted rice kernels are less prone to be worn off during matrix material handling and rice washing than additives confined and concentrated in a coating).

Preferably, step (B) of thermally-mechanically treating the broken rice matrix material is carried out in an extruder at a water content of between 15 wt.-% to 35 wt.-% and during a dwell time of 10 s to 120 s in the extruder.

Advantageously, step (B) of thermally-mechanically treating the broken rice matrix material comprises two partial steps: a first partial step (B1) in a preconditioner at a temperature in the range of 70 °C to 100 °C, a water content of 15 wt.-% to 35 wt.-% and during a dwell time of 10 s to 10 min, preferably 1 min to 5 min, in the preconditioner; and subsequently a second partial step (B2) in an extruder at a water content of between 15 wt.-% to 35 wt.-% and during a dwell time of 10 s to 90 s.

Preferably, the thermal-mechanical treatment is carried out in the extruder at a temperature of between 60 °C to 120 °C, more preferably at a temperature of between 80 °C to 110 °C. The thermal-mechanical treatment may preferably be carried out without significantly further comminuting the particles of the broken rice matrix material. Practically speaking, this means that the starting material will most likely be a mixture of broken rice particles and more or less rice flour. The prevention of any significant further comminution may be achieved by reducing the overall shear to which the product is exposed during the inventive process. To that end, a preconditioner alone or a preconditioner combined with a subsequent low shear extruder may be used for the hydrothermal-mechanical treatment in step (B). In other words, in step (B) the mechanical contribution is less pronounced than the hydrothermal contribution. As a result, the reconstituted rice kernels thus obtained have a composite structure of still identifiable broken rice particles held together by a floury starch matrix. This inhomogeneous structure has interesting organoleptic properties and lends itself for adjusting the bite of reconstituted kernels of this type by adjusting the average particle sizes of the larger component fraction (broken rice) and the smaller component fraction (rice flour).

Advantageously, step (D) of drying the rice-based structures having a shape similar to or like natural rice kernels is carried out in a hot and dry atmosphere with unsaturated water vapour. The drying step is preferably carried out with overall dwell times in the dryer(s) of between 30 min and 5 h. Preferred drying temperatures are within ambient temperature (around 20 °C) and 100 °C. It should be pointed out that long dwell times and low temperatures are generally more preferred for the drying step (D). This allows gentle drying of the reconstituted rice kernels with minimal moisture gradients and internal stresses in the rice matrix material. Most preferably, drying is carried out using ambient air heated to temperatures of between 20 °C and 40 °C for more than 3 h.

A belt dryer or a fluid-bed dryer may be used with step (D) preferably comprising a first partial step (D1) in a fluid-bed dryer and a second partial step (D2) in a belt dryer. The first partial drying step in the fluid-bed dryer provides for rapid moisture loss due to surface drying. The second partial drying step in the belt dryer provides for much slower bulk drying which is limited by the diffusion rate inside the reconstituted rice kernels.

Rather than simply using single-pass heated ambient air for the drying step, at least part of the used heated drying air may be recirculated into the dryers. Such partial recirculation of drying air having increased moisture levels provides a low cost possibility of adjusting the "climate" inside the dryer(s) and helps reduce the overall energy consumption of the drying step (D). If most of the drying air is recirculated, only a small fraction of the moisture from the reconstituted rice kernels to be dried is carried away with the drying air, thus allowing the kernels to dry very slowly with minimal moisture gradients and minimal internal stresses inside the kernels. As a result, cracking and fissuring of the kernels is effectively prevented. In this way, product quality is improved while still saving energy.

Prior to the forming step (C) further substances may be added to the at least partially gelatinized broken rice matrix material. Such additions may include vitamins, binding agents, vegetable fibers such as cellulose, hemicellulose, aleuron etc. or mixtures thereof. Preferably, the addition is carried out during the thermal-mechanical treatment of step (B). Vegetable fibers, just like binding agents, may help strengthen the reconstituted rice kernels.

Step (C) itself may be carried out by compressing the at least partially gelatinized broken rice matrix material which forms a paste, pressing the matter through a nozzle plate and subsequently cutting the strands of pressed matter. In this case it is preferred to mix an emulsifying agent into the matter during the thermal-mechanical treatment of step (B). The emulsifier helps prevent sticking between the reconstituted rice kernels when they exit the nozzle plate and during the initial drying phase, thus preventing the formation of agglomerates in the drying step (D). Also, the emulsifier helps prevent the formation of cracks ("shark skin effect") and pores at the surface of the extrudates. Such pores and cracks would be counter-productive in trying to achieve high cooking stabilities / firmness after cooking. If the product temperature during the thermal-mechanical treatment of step (B) in the extruder barrel reaches temperatures above 100 °C the, downstream-side end of the extruder barrel just upstream of the nozzle plate is cooled to make sure that the water-containing product will exit through the nozzles in the nozzle plate at temperatures clearly below 100 °C in order to prevent expansion ("puffing", "flash off') of the product strands to be cut into reconstituted rice kernels.

The nozzle plate preferably includes several individual nozzles and a rotating knife for cutting the product strands squeezed through the nozzles. Thus, the size and shape of the reconstituted rice kernels may be determined by choosing the cross section of the nozzles, adjusting the pressure build-up and/or extrusion speed in the product and the speed of the rotating knife. As a result, many types of natural rice can be imitated. Even some fancy shapes (little horses, dinosaurs, etc.) are possible.
In a particularly advantageous version of the process according to the invention a water barrier layer is formed at the surface of the shaped rice-based structures after the forming step (C).

This water barrier layer reduces the diffusion rate of water into the reconstituted rice-based kernels, thus increasing the cooking stability (firmness after cooking) of the reconstituted rice kernels.

The formation of the water barrier layer may be carried out by at least partial gelatinization, preferably by complete gelatinization, of the starch at the surface of the rice containing structures having a shape similar to or like natural rice kernels.

In addition or alternatively, the formation of the water barrier layer may be carried out by irreversibly cross-linking the starch at the surface of the rice containing structures having a shape similar to or like natural rice kernels. Preferably, this is done by adding a temperature-triggered cross-linking agent to the matter during the thermal-mechanical treatment of step (B) or during the forming step (C).

In addition or alternatively, the formation of the water barrier layer may be carried out by depositing a hydrocolloid film onto the surface of the rice containing structures having a shape similar to or like natural rice kernels. Preferably, this despositing of hydrocolloids is done during the drying step (D).

Preferably, the formation of the water barrier layer is achieved by surface hardening or surface densification of the product. This surface hardening or surface densification may be carried out during or after the forming step (C) or during or after the drying step (D). This surface hardening or surface densification is preferably carried out at temperatures of between 80 °C and 200 °C and for a period of between 10 s and 3 min. Unlike the overall drying step which is carried out at temperatures close to ambient and for a period of up to 5 h or even longer in order to achieve gentle bulk drying (no cracks, little vitamin damage), the surface hardening or surface densification uses a relatively short but intense "thermal impact" on the reconstituted rice-based kernels. As a result, vitamin damage/loss during the process, primarily in step (B), can be limited, thus reducing the need for "overdosing" of vitamins to compensate for such losses.

Advantageously, for organoleptic reasons, the measures as described in the previous paragraphs are carried out individually or in combination to such a degree that the firmness ("bite") of the reconstituted rice after cooking is adjusted to be about the same as the firmness after cooking of the natural rice kernels to be later mixed with the reconstituted rice kernels. In other words, the reconstituted rice is adjusted such that its firmness ("bite") after cooking is about the same as the firmness after cooking of the natural rice kernels. This means that the reconstituted rice is adjusted by one or a combination of the above measures such that, when cooked during a specific cooking time period, the firmness of the reconstituted rice is practically the same as or sufficiently close to the firmness of the natural rice kernels.

The firmness of the reconstituted and natural rice kernels after cooking is compared by a biting test. A test person has to first bite a cooked natural rice kernel - the reference kernel - having a reference firmness after a "reference cooking time" and then bite a cooked kernel of the reconstituted rice which has been exposed to a specific cooking time period. It is relatively easy for a test person to decide which of the two kernels has more firmness. If this comparison is repeated with cooked kernels of the reconstituted rice having been exposed to a broad range of cooking times, some will have a smaller, about the same or a higher firmness than the reference firmness of the cooked natural rice kernels. From this series of comparisons the "equivalent cooking time" of the reconstituted rice kernels can be identified which may be expressed as a percentage of the "reference cooking time" of the natural rice kernels having the same firmness after cooking as the reconstituted rice kernels after exposure to cooking during this "reference cooking time".

Preferably, the reconstituted rice is adjusted such that its equivalent cooking time is between 30% and 150%, preferably between 50% and 120%, of the reference cooking time of the natural rice which is to be mixed with it. When such reconstituted rice kernels are mixed with the corresponding natural rice kernels and then exposed to cooking during the reference cooking time, only slight overcooking or undercooking of the added reconstituted rice kernels will occur which will then exhibit less and more firmness, respectively, than the natural rice kernels. However, this can be tolerated under certain circumstances. For instance, when preparing rice in a rice cooker without any surplus of water and without any rinsing of the rice, the above ranges of equivalent cooking times can be easily tolerated because the result of this type of cooking is a sticky mass of rice kernels with little risk of vitamins or minerals being washed away during rice preparation.

Preferably, a colorant is added during the thermal-mechanical treatment of step (B), giving the recon rice thus obtained the same or a similar color as the color of the natural rice kernels to be mixed with the recon rice in order to render the recon rice thus obtained as inconspicuous as possible within the natural rice kernels.

Alternatively, a colorant is added during the thermal-mechanical treatment of step (B), giving the recon rice thus obtained a color different from the color of the natural rice kernels to be mixed with the recon rice in order to render the recon rice thus obtained quite conspicuous within the natural rice kernels.

The invention is illustrated further by the Examples which follow.

### Example 1

960 g of nicotinamide, 420 g of vitamin A palmitate (500'000 IU/g in the vitamin product form), 84 g of thiamine mononitrate, 26 g of folic acid and 150 g of vitamin B12 (0.1% vitamin B 12 in the product form) were mixed. This vitamin premix was mixed with rice flour and 1 kg of emulsifier (distilled monoglycerides sold under the trade name "DIMODAN PH 100 NS/B" by Danisco A/S, Denmark to obtain a 7.5 kg of a vitamin/ emulsifier/ rice flour pre-blend. This pre-blend is dosified with 15 kg/h to an extruder unit, which was fed with 185 kg/h of rice flour. The mass was semigelatinized in a two-chamber preconditioner for about 1-2 minutes at temperatures between 80°C and 98°C by first fluidizing and steaming the flour particles and thus wetting their surface in the first chamber and then slowly mixing the wetted flour particles to let the water soak into the flour particles in the second chamber. Afterwards the dough was extruded in a double screw extruder and formed into similar rice grains by cutting the strands after the die. The grains had a moisture content of 28-29% and were dried in a fluidized bed dryer for 40 minutes at 70°C. After drying the resulting vitaminized similar rice grains were mixed in a ratio of 1% with natural rice.

The content of the respective vitamins in the so-obtained vitamin-enriched rice was as follows:

| | | | Processing loss |
|---|---|---|---|
| Per 1 g: | Vitamin A | 0.52 mg* | 18 % |
| | Vitamin B1 | 0.67 mg | 20 % |
| | Folic acid | 0.26 mg | 0 % |
| | Nicotinamide | 8.5 mg | 11 % |
| | Vitamin B12 | 1.32 µg | 12 % |

| | | | |
|---|---|---|---|
| * Retinol equivalent | | | |

The obtained artificial rice had a similar appearance, colour and taste like natural rice. It showed a very good cooking stability, so that vitamins were protected and embedded within the grain. In a dilution in natural rice they were not distinguishable. When the extruded rice kernels were washed with water or cooked, no significant loss of vitamins could be detected.

### Example 2

Example 2 was followed Example 1 without a preconditioning step. The dry mixture was wetted with 30% water during the extrusion process. Instead of a vitamin mix, only vitamin A (as vitamin A palmitate, 500'000 IU/g powder) was used. The retention of vitamin A after processing was 90%.

### Example 3

Following the procedure of Example 1 but adding vitamin A after preconditioning. For that purpose 420 g vitamin A palmitate (500'000 IU/g in the vitamin product form) and 4580 g rice flour were mixed to obtain a 5 kg vitamin/ rice flour premix. This premix was added to the dough after preconditioning. The retention of vitamin A after processing was 86%.

## Claims

1. Process for the preparation of enriched reconstituted rice which comprises the steps of
(a) hydrating a mixture of a comminuted rice matrix material, at least one micronutrient, and an emulsifier to obtain a paste containing 15 - 35 wt.-% of water and kneading the paste obtained while heating to 70-100 °C for no more than 5 minutes until the rice starch is semigelatinized;
(b) forming the semigelatinized mass to strands and cutting them to obtain grains similar or equal to the size of rice grains; and
(c) drying the grains to a moisture content of no more than 15 wt.-%.

2. A process as in claim 1 wherein the micronutrient is added to the paste after step (a) and before step (b).

3. A process as in any one of claims 1-2 wherein the micronutrients are added in an amount to provide 5% to 300% of the RDA value in 1 g of the final composition.

4. A process as in any one of claims 1-3 wherein the micronutrients are at least one of vitamin A, vitamin B1, B2, B6, folic acid, niacin, vitamin B12, Vitamin K vitamin C and vitamin E as well as derivatives thereof.

5. A process as in claim 4 wherein the micronutients are added in an amount to provide in the recon rice 45-2700 mg/kg of vitamin A equivalents, 60-3600 mg/kg of vitamin B1, 20-1200 mg/kg of folic acid, 0.8-48 g/kg of niacin, and 0.12-7.2 mg/kg of vitamin B12.

## Patentansprüche

1. Verfahren zum Herstellen von angereichertem rekonstituiertem Reis, umfassend die Schritte
(a) Hydratisieren eines Gemischs aus einem zerkleinerten Reismatrixmaterial, wenigstens einem Mikronährstoff und einem Emulgator, um eine Paste zu erhalten, die 15-35 Gew.-% Wasser enthält, und Kneten der erhaltenen Paste unter Erhitzen auf 70-100 °C für nicht mehr als 5 Minuten, bis die Reisstärke halbgeliert ist;
(b) Formen der halbgelierten Masse zu Strängen und Schneiden davon, um Körner zu erhalten, die der Größe von Reiskörnern ähnlich oder gleich sind; und
(c) Trocknen der Körner auf einen Feuchtegehalt von nicht mehr als 15 Gew.-%.

2. Verfahren gemäß Anspruch 1, wobei der Mikronährstoff nach Schritt (a) und vor Schritt (b) zu der Paste zugegeben wird.

3. Verfahren gemäß einem der Ansprüche 1-2, wobei die Mikronährstoffe in einer Menge zugegeben werden, um 5 % bis 300 % des RDA-Werts in 1 g der fertigen Zusammensetzung bereitzustellen.

4. Verfahren gemäß einem der Ansprüche 1-3, wobei die Mikronährstoffe wenigstens eines von Vitamin A, Vitamin B1, B2, B6, Folsäure, Niacin, Vitamin B12, Vitamin K, Vitamin C und Vitamin E und Derivaten davon sind.

5. Verfahren gemäß Anspruch 4, wobei die Mikronährstoffe in einer Menge zugegeben werden, um in dem Recon-Reis 45-2700 mg/kg Vitamin-A-Äquivalente, 60-3600 mg/kg Vitamin B1, 20-1200 mg/kg Folsäure, 0,8-48 g/kg Niacin und 0,12-7,2 mg/kg Vitamin B12 bereitzustellen.

## Revendications

1. Procédé de préparation de riz reconstitué enrichi, comprenant les étapes consistant à
(a) hydrater un mélange d'un matériau matriciel de riz broyé, d'au moins un micronutriment, et d'un émulsifiant, afin d'obtenir une pâte contenant 15-35% en poids d'eau et pétrir la pâte obtenue tout en chauffant à 70-100°C pendant une durée non supérieure à 5 minutes, jusqu'à ce que l'amidon de riz soit semi-gélatinisé ;
(b) former la masse semi-gélatinisée en fils et les découper afin d'obtenir des grains similaires ou égaux à la taille de grains de riz ; et
(c) sécher les grains jusqu'à une teneur en humidité non supérieure à 15% en poids.

2. Procédé selon la revendication 1, dans lequel le micronutriment est ajouté à la pâte après l'étape (a) et avant l'étape (b).

3. Procédé selon l'une quelconque des revendications 1-2, dans lequel les micronutriments sont ajoutés selon une quantité destinée à fournir de 5% à 300% de la valeur de DQR dans 1 g de la composition finale.

4. Procédé selon l'une quelconque des revendications 1-3, dans lequel les micronutriments sont au moins l'un parmi la vitamine A, la vitamine B1, B2, B6, l'acide folique, la niacine, la vitamine B12, la vitamine K, la vitamine C et la vitamine E, ainsi que des dérivés de ceux-ci.

5. Procédé selon la revendication 4, dans lequel les micronutriments sont ajoutés selon une quantité destinée à fournir dans le riz reconstitué 45-2700 mg/kg d'équivalents de vitamine A, 60-3600 mg/kg de vitamine B1, 20-1200 mg/kg d'acide folique, 0,8-48 g/kg de niacine, et 0,12-7,2 mg/kg de vitamine B12.
